# EUROPEAN PATENT APPLICATION

(11) **EP 2 804 158 A1**
(43) Date of publication of application: **19.11.2014**
(21) Application number: 14168259.1
(22) Date of filing: 14.05.2014
(51) Int. Cl.: G07F 17/42, G07B 1/00, G02B 27/22

(54) **Virtual image display device**

(30) Priority: 15.05.2013 ES 201330591 U
(71) Applicant: Sallent Puigcercos, Pere, 08193 Cerdanyola del Vallès, Barcelona (ES)
(72) Inventor: Sallent Puigcercos, Pere, 08193 Cerdanyola del Vallès, Barcelona (ES)
(74) Representative: Mohammadian, Dario

(57) **Abstract**

A virtual image display device is disclosed which provides a virtual representation of the view of an object, venue or the like to a user from different locations or angles. The device can additionally render a three-dimensional virtual representation of the object or venue in question. The device comprises projection means projecting images of the object or venue onto an image projection surface creating the virtual representation to be viewed by a user. This invention is preferably applicable in ticket offices, teller machines and telematic ticket sales terminals.

## Description

### OBJECT OF THE INVENTION

This virtual image display device has constructive features aimed at allowing the combination of separately projected images, allowing a view of the projected images with a three-dimensional effect.

### FIELD OF APPLICATION OF THE INVENTION

This invention is preferably applicable in ticket offices, teller machines and telematic ticket sales terminals to provide a user with a virtual image of a venue seen from the seat or location chosen by said user, although use in the promotional-advertising field for presenting various objects is not ruled out.

### BACKGROUND OF THE INVENTION

Displaying images for advertising or informative purposes is generally done by means of printed, stationary posters or by means of images displayed on a monitor or projected onto a screen.

In this second case, in order to display an object or venue, it is necessary to make a previous montage of the images, showing the user or possible client the images or views selected by the announcer.

In such on-screen displays the user cannot obtain more information about the product or venue offered other than what the announcer has chosen, which may be insufficient for the user to be able to determine if the displayed product is of his/her interest, or if the choice of a ticket for a certain location in the venue shown is the most suitable.

A typical example would be images that are shown of movie theaters, airplanes, or various spaces while purchasing tickets at sales terminals.

Whether these venues are performance halls, airplanes or means of transport in general, they have a series of numbered seats or locations for the possible user, such that each user can choose from the seats or locations available the one from which he/she will supposedly have a better view or be more comfortable.

The user chooses the seat through various means today. In the case of purchasing the ticket for a show in a ticket office with face to face customer service, the person in charge simply explains verbally the location of available seats with generic expressions such as "first rows", "last rows", "central aisle", "sides", etc. These indications allow the user to have an idea about where the selected location is located inside the venue, however the user is unaware of the view that he/she will have from the selected location.

When tickets are purchased telematically, either from a computer, an automated teller machine or any other terminal, the user can choose the desired location on a fixed image representing a plan view of the venue in question and of the different locations intended for users.

In this case, as in the preceding case, the user can see the chosen location on the plan view of the venue in question, but the user is unaware of the view he/she will have from said location.

This same problem exists in the commercial or advertising display of products of any type, where a possible client can see general images of the product chosen by the announcer but cannot select or have access to other possible viewing angles.

The applicant is unaware of the existence of background documents that allow the user to choose possible viewing angles of an object or venue and to obtain as a response a three-dimensional representation of the object or venue in question, seen from the angle or location chosen by the user.

### DESCRIPTION OF THE INVENTION

The virtual image display device, object of the invention, has constructive features aimed at providing a user with a virtual representation of the view of an object, venue or the like from a location or angle that can be selected by the actual user, this device being a means of help for the user while choosing a product to purchase, a ticket for a show, a ticket for a trip, etc.

This device can additionally render a three-dimensional virtual representation of the object or venue in question, for example rotating with respect to a vertical axis, such that the user can see the angle or the chosen location in the venue.

For the purpose of achieving the proposed objectives, this device comprises a casing provided with a viewing window for viewing the images displayed by the device and an image projection surface, made of a transparent or translucent material arranged inside the casing and visible through the viewing window, said projection surface having a front face and a rear face.

This device additionally comprises a memory block containing at least a plurality of images corresponding to different views of the object or venue from different possible angles or locations that can be selected by the user.

Inside the casing the device comprises first projection means for projecting onto the front face of the projection surface images of an object or venue that can be selected from the images available in the memory block, and second projection means of images, suitable for projecting onto the rear face of the projection surface images forming a dark background with audiovisual content.

The purpose of the second projection means projecting this dark background is to facilitate and enhance the user's viewing of the images projected by the first projection means.

With this device, the combination of the images projected by the first and by the second projection means forms a virtual representation that is appealing to the user and that appears to be suspended, floating in midair.

This device comprises a user interface suitable for selecting a certain angle or location for the user's viewing of the object or venue; said interface being connected to a microprocessor which, by means of a specific program and depending on the angle or location selected by the user, chooses in the memory block the images to be projected simultaneously by the first and the second projection means, generating on the projection surface a rotating virtual representation of a three-dimensional view of the object or venue, and/or of the view available from the angle or location selected by the user.

In one embodiment of the invention, this device is integrated in an automated teller machine or in a telematic ticket sales terminal.

### DESCRIPTION OF THE DRAWINGS

To complement the description that is being made and to aid in understanding the features of the invention, a set of drawings is attached to the present specification in which the following has been depicted with an illustrative and non-limiting character:
Figure 1 shows a front elevational view of an embodiment of the virtual image device according to the invention, applied in this case to the display of a performance venue from any location or seat that can be selected by the user.
Figure 2 shows a schematic profile view of the device from the preceding figure sectioned by a vertical plane, where the different elements making up the device can be seen.
Figure 3 shows a front elevational view of the viewing window defined in the casing of the device, the images projected by the first projection means and the second projection means onto the projection surface being able to be seen through said viewing window; showing a representation of a venue, represented in this case by a movie theater, seen from a specific location or seat selected by a user.
Figure 4 shows a view that is similar to the preceding figure, the images projected by the first and second projection means generating a virtual representation, rotating about a vertical axis, of a three-dimensional view of a venue represented in this case as a movie theater, being able to be seen in this case.

### PREFERRED EMBODIMENT OF THE INVENTION

In the embodiment shown in the attached drawings, the device comprises a casing (1) provided in the front with a viewing window (2), and with a user interface (3) through which a user can choose a certain location of a venue where a show will be held.

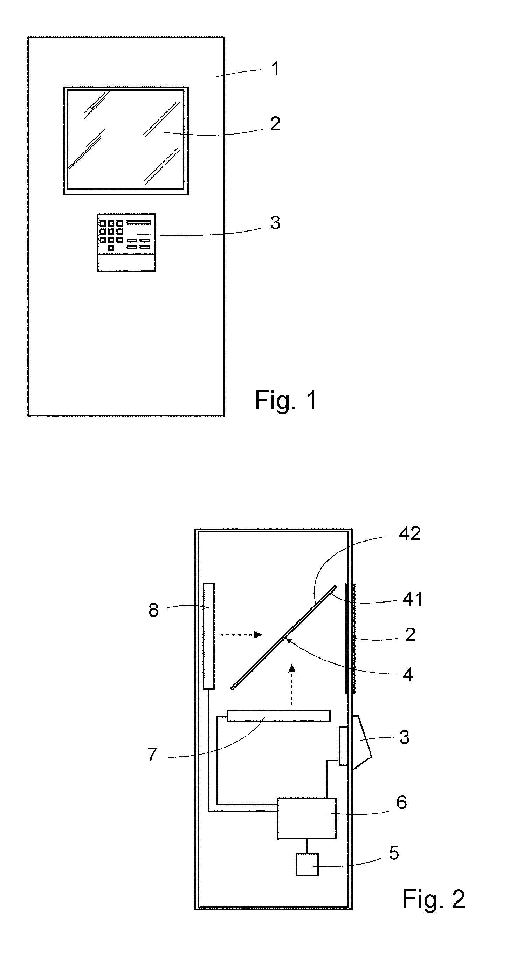

As can be seen in Figure 2, inside the casing (1) and facing the viewing window (3), the device comprises an image projection surface (4) consisting in this case of glass with high outer reflection, preferably around 40%, provided with a front face (41) and a rear face (42).

Said projection surface (4) is arranged in an inclined position with respect to the horizontal, forming with said horizontal an approximately 45° angle.

The device comprises a memory block (5) containing images corresponding to views of the venue from the different locations that are intended for the public and can be selected by the user.

The device comprises a microprocessor (6) to which the user interface (3), the memory block (5), and first and second projection means (7, 8) suitable for projecting images onto the front face (41) and the rear face (42) of the projection surface (4), respectively, are connected.

In a specific embodiment, said first and second projection means (6, 7) consist of respective television screens.

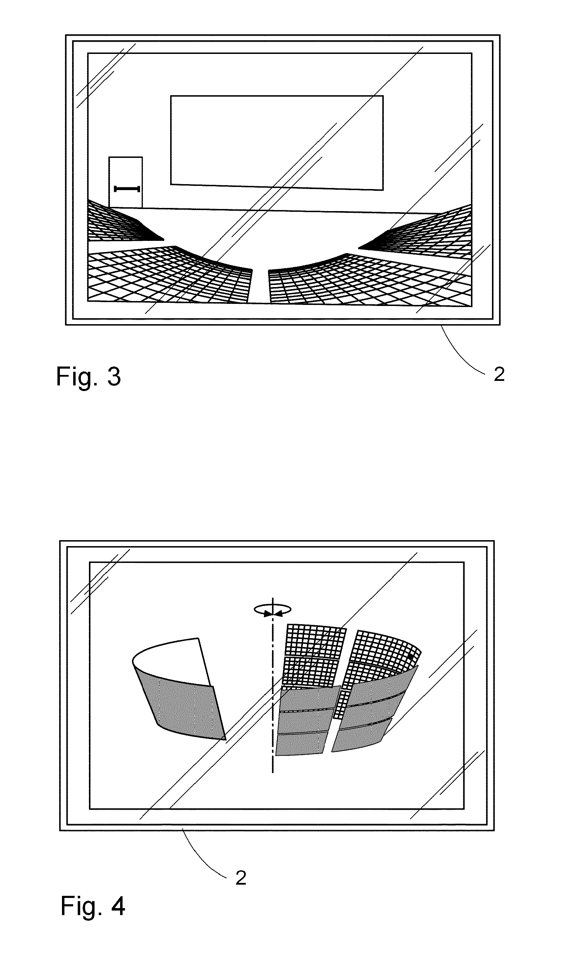

When a user chooses a certain location of a venue in the device through the user interface (3), the microprocessor (6), by means of a specific program and depending on the chosen location, chooses in the memory block the images to be projected simultaneously by the first and the second projection means (7, 8); generating on the projection surface (4) a virtual representation of the venue seen from the location selected by the user, said representation being visible through the viewing window (2), as shown in the example of Figure 3.

The user can thus know beforehand the view that he/she will have from the chosen location and accordingly choose that location that seems the most suitable to him/her prior to purchasing the corresponding ticket.

As shown in Figure 4, the device can also form a rotating virtual representation of a three-dimensional view of the venue, in this specific case rotating about a vertical axis, by means of the images projected by the first projection means and the second projection means (7, 8).

Having sufficiently described the nature of the invention as well as a preferred embodiment thereof, it is hereby stated for all intents and purposes that the materials, shape, size and arrangement of the described elements could be modified provided that such modification does not entail an alteration of the essential features of the invention that are claimed below.

## Claims

1. Virtual image display device; **characterized in that** it comprises:
- a casing (1) provided with a viewing window (2);
- an image projection surface (4) made of a transparent or translucent material, arranged inside the casing (1) and visible through the viewing window (2); said projection surface (4) having a front face (41) and a rear face (42);
- a memory block (5) containing at least a plurality of images corresponding to different views of an object or venue from different possible angles or locations that can be selected by the user;
- first projection means (7), suitable for projecting onto the front face (41) of the projection surface (4) images of the object or venue that can be selected from the images available in the memory block (5);
- second projection means (8) suitable for projecting onto the rear face (42) of the projection surface (4) images forming a dark background with audiovisual content;
- a user interface (3) suitable so that the user can select a certain location or viewing angle;
- a microprocessor (6) which, by means of a specific program and depending on the location selected by the user, chooses in the memory block (5) the images to be projected simultaneously by first and second projection means (7, 8), generating on the projection surface (4) a rotating virtual representation of a three-dimensional view of the object or venue; and/or of the view available from the angle or location selected by the user.

2. The device according to claim 1, **characterized in that** the projection surface (4) consists of glass with high outer reflection, preferably around 40%.

3. The device according to any one of the preceding claims, **characterized in that** the projection surface (4) is arranged in an inclined position with respect to the horizontal, forming with said horizontal an approximately 45° angle.

4. The device according to claim 1, **characterized in that** it is integrated in an automated teller machine or telematic ticket sales terminal.
